(19) Europäisches Patentamt / European Patent Office / Office européen des brevets

(11) **EP 2 011 342 B1**

(12) **EUROPEAN PATENT SPECIFICATION**

(45) Date of publication and mention of the grant of the patent:
**28.06.2017 Bulletin 2017/26**

(21) Application number: **07735431.4**

(22) Date of filing: **10.04.2007**

(51) Int Cl.:
*H04N 19/55* <sup>(2014.01)</sup>     *H04N 19/56* <sup>(2014.01)</sup>

(86) International application number:
**PCT/IB2007/051264**

(87) International publication number:
**WO 2007/119198 (25.10.2007 Gazette 2007/43)**

(54) **MOTION ESTIMATION AT IMAGE BORDERS**

BEWEGUNGSSCHÄTZUNG AN BILDRÄNDERN

ESTIMATION DE MOUVEMENT AU NIVEAU DES BORDURES D'IMAGE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **14.04.2006 EP 06112676**

(43) Date of publication of application:
**07.01.2009 Bulletin 2009/02**

(73) Proprietor: **NXP B.V.**
**5656 AG Eindhoven (NL)**

(72) Inventor: **BOSMA, Marco, K.**
**5656 AA Eindhoven (NL)**

(74) Representative: **Miles, John Richard**
**NXP SEMICONDUCTORS**
**Intellectual Property Group**
**Abbey House**
**25 Clarendon Road**
**Redhill, Surrey RH1 1QZ (GB)**

(56) References cited:
**GB-A- 2 248 361          GB-A- 2 286 500**
**US-A1- 2005 013 362**

- **YEN-KUANG CHEN ET AL: "Frame-rate up-conversion using transmitted true motion vectors" SECOND IEEE WORKSHOP ON MULTIMEDIA SIGNAL PROCESSING, 7 December 1998 (1998-12-07), pages 622-627, XP010318331 IEEE, Piscataway, US ISBN: 0-7803-4919-9**
- **YEN-KUANG CHEN ET AL: "A feature tracking algorithm using neighborhood relaxation with multi-candidate pre-screening" PROCEEDINGS OF THE INTERNATIONAL CONFERENCE ON IMAGE PROCESSING (ICIP 1996), vol. 1, 16 September 1996 (1996-09-16), pages 513-516, XP010202707 IEEE, New York, US ISBN: 0-7803-3259-8**
- **HAAN DE G: "PROGRESS IN MOTION ESTIMATION FOR CONSUMER VIDEO FORMAT CONVERSION" IEEE TRANSACTIONS ON CONSUMER ELECTRONICS, IEEE SERVICE CENTER, NEW YORK, NY, US, vol. 46, no. 3, August 2000 (2000-08), pages 449-459, XP001086676 ISSN: 0098-3063 cited in the application**

EP 2 011 342 B1

**Description**

The present patent application relates in general to improved motion estimation at borders of an active image.

With the advent of new technology in the field of video processing, the motion compensated video algorithms became affordable as well as necessary for high quality video processing. To provide for high quality video processing, different motion compensation applications have been provided. Applications such as motion compensated (MC) filtering for noise reduction, MC prediction for coding, MC de-interlacing for conversion from interlaced to progressive formats, or MC picture rate conversions are known. In frame-rate conversion, a new video frame is calculated in between original input frames. Without motion-compensation, frames have to be repeated or blended, resulting in non-fluid motion (called motion judder) or fuzziness. The applications mentioned above all benefit from motion estimation (ME) algorithms, for which various methods are known. For example a recursive motion estimation method utilizes a set of candidate motion vectors. The candidate motion vectors are used to calculate match errors between blocks of pixels within different time instances. The candidate motion vector from a set of vectors providing the minimum match error may be chosen as motion vector for further processing.

However, near the borders of the active video signal, certain candidate motion vectors may cause one of the matching areas to be at least partially outside the active video area. As a consequence, the match error cannot be calculated. At the left or right edge/ top or bottom of the screen, for instance, only the match error of a vertical/ horizontal motion vector can be evaluated.

According to the art, this problem is solved by doing no motion estimation at the blocks closest to the edge of an image. Instead, the motion vectors of these blocks are copied from spatially neighboring blocks that are farther away from the edge.

For example, when the border at which no motion estimation is done is determined to be, for instance n*(8x8) blocks wide, then the first block in the image for which the match error (SAD) is calculated is SAD (n*8,n*8). When a candidate motion vector has an absolute value of v greater n*8, the value of some pixels in the match area in the next frame cannot be calculated because they would be outside the active image area. In these cases, if the match error for the correct vector cannot be calculated, another (wrong) vector for which the match error can be calculated would be selected according to the art. In many cases, this will be the zero vector.

In conventional television, the blocks for which a wrong motion vector will be estimated that are not within the active area, are normally well inside the overscan area and will hence not be visible. On a PC screen and other (matrix) screens without an overscan area, however, artifacts will show up, partially due to incorrect motion vectors, and partially because of the abrupt change in motion vectors. Furthermore, these wrong vectors are used as candidate motion vectors for spatially neighboring blocks. Because the 3D-RS algorithm has an inherent preference for consistent motion fields, these wrong candidates affect also the reliability of other blocks, especially in areas with little detail and/or low contrast where the match error is low for all candidates. One such example for using wrong motion vectors at image borders is disclosed in GB2286500A (SONY UK LTD) 16 August 1995.

Another approach is disclosed in US2005/013362A1 (PEARSON ERIC ET AI) 20 January 2005 which solves the border problem by padding the missing pixel values by approximating them from neighbouring pixel values. However, this additional step increases the complexity. Therefore, it is an object of the present patent application to provide for motion estimation with improved estimation results at image borders. It is another object of the present patent application to provide for motion estimation, which is reliable at image borders. Another object of the patent application is to provide for robust motion estimation at image borders.

Aspects of the invention are defined in the claims. In a first aspect there is described a method for determining estimated motion vectors according to claim 1.

Signals according to embodiments can be any images sequence, for example, a video sequence. Images within the signals can be composed of pixels. Pixels can be image elements describing the luminance and chrominance of the particular part of the image. A plurality of adjacent pixels within the image can be understood as pixel block.

Elements within the image can be subject to motion of several frames. Motion of the elements can be described by motion vectors. Motion vectors can describe the direction and speed of movement of particular pixels or blocks of pixels.

Motion estimation can be understood as calculating a probability of motion. Motion vectors which are most likely to describe the actual motion within the image can be calculated using motion estimation. With these motion vectors, it can be possible to predict images of following frames. The estimated motion vectors can also be used for de-interlacing interlaced images.

Candidate motion vectors can be a set of possible vectors describing possible motion of pixels or blocks of pixels. The set of candidate motion vectors can be used to determine one estimated motion vector, which suits best the actual motion within the image. For example, high quality video format conversion algorithms, such as, for example, de-interlacing and temporal up-conversion, computer vision applications, and video compression, may require motion estimation.

The present patent application makes it possible to calculate the match error near the borders of an active video signal also for candidate motion vectors that would cause one of the match areas to be at least partially outside the active area of the image. To provide the calculation of a match error with valid pixel values, the match blocks and/or the current block may be given an offset such that both match blocks are fully inside the active video area after shifting. The pixel values of the shifted block are used for calculating the match error.

It has to be noted, that the shifting may be applied to the blocks only, and not the values. In other words, the area of the blocks to be considered for calculating the match error is shifted. For the actual calculation of the match error, the pixel values of the pixels, which lie in the shifted areas, are used. It is further to be noted, that the shift as such does not change the motion vector. The match error calculated in this way is used as the correct match error for the block of pixels closest to the edge for which the match error for this vector can be computed. Even the match errors for a set of vectors for the first and last blocks of the active video area can be calculated in this way.

It should be noted that the current block in the image may be a block of pixels within an input image of the signal. In this case, a match block may lie within temporally neighboring, e.g. previous and next images. The current block in the image may, however, also be understood as a block within an image, which is to be estimated based on a previous and a next image. Then, the image of the current block needs not to be existent in the input signal. Such a current block may be used in up-conversion.

The two match blocks may be used for calculating the correct motion vector from a set of a plurality of candidate motion vectors. It is possible to omit the current block and use just the two match blocks. An error measure for each candidate motion vector may be calculated for pixel values within the match blocks. Once one block would lie outside the active area of the image, it may be possible to shift the area of the match block by an offset, so that the calculation of the error measure is applied on valid pixel values from pixels inside the active image area.

In an embodiment the blocks are shifted according to claim 2. It may be possible to shift both match blocks and the current block may be shifted by the same value, i.e. a shift vector, such that all blocks are within the active image area. In case the match block is outside the right side of the active image area, the offset value may be negative, and in case the match block is outside the left side of the active image area, the offset value may be positive.

The match error may be calculated based on pixel blocks, which are spatially considered closest to the pixels, that would have been used if all blocks were inside the active image area. By shifting the match blocks by an offset, which is preferably the smallest possible offset providing the match blocks and the current block within the active area, provides for calculating the match error based on match blocks, which are closest to the block which would have been used without shifting.

The active image area may not always be equal to the actual screen or full video frame. For instance, black bars (e.g. due to letterbox in wide-screen movies), can make the active video area smaller. Estimating motion at (or near) these black bars may provide the same problems as described before. Therefore, using the black bar detection according to claim 3 may greatly enhance the motion estimation near black bars.

The candidate motion vector may describe possible displacements of a pixel within a search area according to claim 4. Such displacements can be in the x- and y-direction. The vectors can describe the direction of motion by their x- and y-components. The speed of motion can be described by the absolute value of the vector.

In embodiments the candidate motion vector are created using spatial and/or temporal prediction according to claim 5 For example, in scanned images providing scanned image lines, causality prohibits the use of spatial prediction in blocks of the image not yet been transmitted. Instead, temporal prediction can be used.

The error criteria can be a criterion according to claim 6.

A further aspect of the application is a computer program product for determining estimated motion vectors according to claim 7. Yet, a further aspect of the application is a display device comprising a receiver according to claim 8 These and others aspects of the invention will become apparent from and elucidated with reference to the following embodiments.

In the drawings show:

Fig. 1 an illustration of a block matching method;
Fig. 2A and B illustrations of a sets of candidate motion vectors for a recursive search block-matcher;
Fig. 3 an illustration of a flowchart according to embodiments
Fig. 4 an illustration of a device according to embodiments;and
Fig. 5 an illustration of a block matching method with shifting the blocks according to embodiments.

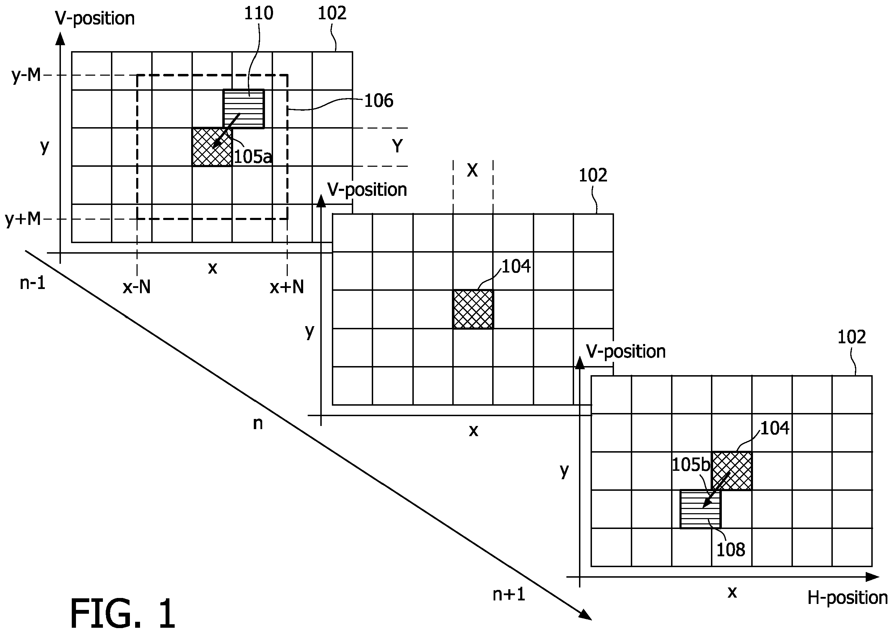

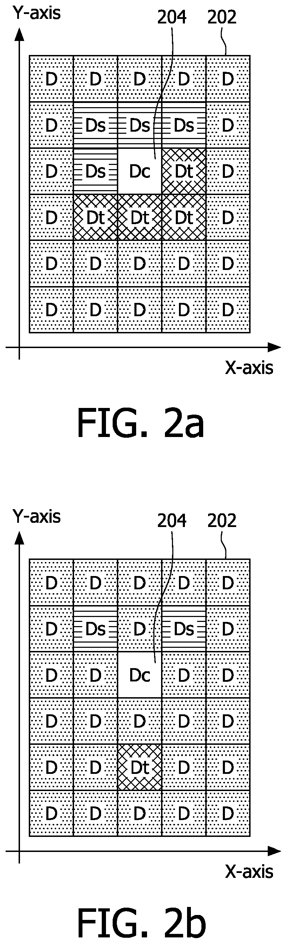

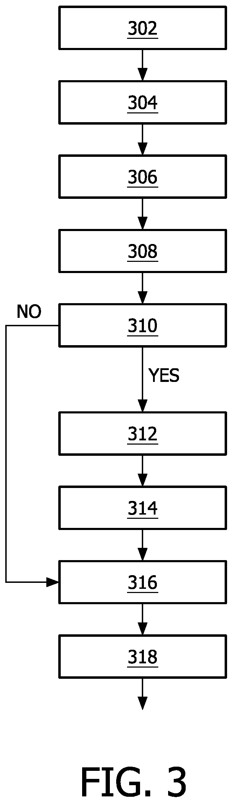

As will be illustrated in more detail below, a so-called 3D-recursive search algorithm may be used for fast motion estimation. In this algorithm, the motion is estimated by minimizing the match error, e.g. the sum of absolute differences (SAD), between two blocks of pixels for a set of candidate motion vectors. In a commonly used implementation, blocks of 8x8 pixels are used for block matching. The block matching will be described in more detail in Fig. 1. For each block of pixels, a number of candidate motion vectors are evaluated. These candidate motion vectors are obtained from the best matching vectors of neighboring blocks. Some of these blocks have been processed in the same motion-estimation pass and are called spatial candidates, while other blocks have not yet been calculated this pass and hence contain the motion vectors of a previous pass. Motion vectors from these blocks are called temporal candidates. Possible candidate motion vectors are illustrated in Fig. 2. Besides the spatial/temporal candidates, also some extra vectors are evaluated: the zero-vector and one or more update vectors. The update vectors are obtained by adding a (small) semi-random offset vector to a spatial and/or temporal candidate. When applying block matching as illustrated in Fig. 1, match blocks may lie outside the active area of the image. In this case, a shifting of blocks is applied, as will be described in more detail with respect to Figs. 3-5.

Fig. 1 depicts temporal instances n-1, n, n+1 of an images 102 within a video stream. For motion estimation, candidate motion vectors 105 are used to calculate a match value between, for example, a block 104 in the current image n, a match block 110 in a previous image n-1 and a match block 108 within a succeeding image n+1. The match blocks 108, 110are selected within a search area 106. A correlation measure, i.e. a match error between pixel values within the blocks 104, 108, 110 may be optimized by selecting the best candidate motion vector $\vec{C}$ 105, which yields the lowest match error. By that, different candidate motion vectors $\vec{C}$ 105 may be tested, resulting in different positions of the match blocks 108, 110, and thus possibly different match errors. The candidate motion vector, which yields the minimum match error may be selected as estimated motion vector.

Searching the minimum of a match error in a block-matcher, may be a two dimensional optimization problem for which many solutions are available. One possible implementation uses a three-step block-matcher, a 2D logarithmic, or cross search method, or the one-at-a-time-search block-matching. Different block-matching strategies are disclosed in G. de Haan, "Progress in Motion Estimation for Consumer Video Format Conversion", IEEE transactions on consumer electronics, vol. 46, no. 3, August 2000, pp. 449-459.

A possible implementation of an optimization strategy may be a 3D recursive search block-matcher (3D RS). This 3D RS accounts for that for objects larger than blocks, a best candidate motion vector may occur in the spatial and/or temporal neighborhood of a pixel or block.

To determine the estimated motion vector $\vec{D}(\vec{X}, \text{n})$ for a block 104, various candidate motion vectors $\vec{C}$ 105 may be evaluated applying an error measure $\varepsilon(\vec{C}, \vec{X}, n)$.

As depicted in Fig. 2a, assuming a scanning direction from left to right, and from top to bottom, causality prohibits the use of spatial candidate vectors from blocks Ds, right and below the current block Dc 104. Instead, temporal prediction vectors need to be used from temporally following blocks Dt. In relation to a current block Dc, within a search area 106, spatial prediction vectors from blocks Ds and temporal prediction vectors from blocks Dt are available. As only blocks that already have been scanned may be used for spatial prediction of the current block Dc, spatial prediction is only possible with the blocks Ds. Temporal prediction is possible with the blocks Dt, as from a previous temporal instance of search area 106, information about the blocks Dt may be available.

It has been found that evaluating all possible vectors within the search range makes no sense. It may already be sufficient to evaluate vectors taken from spatially neighboring blocks such as:

$$CS(\vec{X}, n) = \left\{ \vec{C} \in CS^{\max} \middle| \vec{C} = \vec{D}(\vec{X} + \begin{pmatrix} iX \\ jY \end{pmatrix}, n) \right\},$$

$$i, j = -1, 0, +1$$

where CS$^{\max}$ is defined as a set of candidate vectors $\vec{C}$ describing all possible displacements (integers, or non-integers on the pixel grid) with respect to X within the search area SA $(\vec{x})$ in the previous image as

$$CS^{\max} = \left\{ \vec{C} \middle| -N \leq C_x \leq +N, -M \leq C_y \leq +M \right\},$$

where n and m are constants limiting SA$(\vec{X})$. To reduce calculations overhead, it may be sufficient to evaluate vectors $\vec{C}$ only taken from the spatially neighboring blocks CS. X, Y may define the block width and height, respectively. Causality and the need for pipelining in the implementation prevents that all neighboring blocks are available, and at initialization, all vectors may be zero.

To account for the availability of the vectors, those vectors that have not yet been calculated in the current image may be taken from the corresponding location in the previous vector field. Fig. 2a illustrates the relative position of the current block Dc and the blocks from which the result vectors are taken as candidate motion vectors Ds, Dt, in case the blocks are scanned from top left to bottom right.

The problem of zero vectors at initialization may be accounted for by adding an update vector. One possible implementation of omitting some spatio-temporal predictions from the candidate set is depicted in Fig. 2b, where the candidate set $CS(\vec{X},n)$ may be defined by

$$CS(\vec{X},n) = \left\{ \begin{array}{c} (\vec{D}(\vec{X} - \begin{pmatrix} X \\ Y \end{pmatrix}, n) + \vec{U}_1(\vec{X},n)), \\ (\vec{D}(\vec{X} - \begin{pmatrix} -X \\ Y \end{pmatrix}, n) + \vec{U}_2(\vec{X},n)), \\ (\vec{D}(\vec{X} + \begin{pmatrix} 0 \\ 2Y \end{pmatrix}, n-1)) \end{array} \right\}$$

where the update vectors $\vec{U}_1(\vec{X},n)$ and $\vec{U}_2(\vec{X},n)$ may be alternately available, and taken from a limited fixed integer, or non-integer, update set, such as

$$US_i(\vec{X},n) = \left\{ \begin{array}{c} \vec{0} \\ \vec{y}_u, -\vec{y}_u, \vec{x}_u, -\vec{x}_u, \\ 2\vec{y}_u, -2\vec{y}_u, 3\vec{x}_u, -3\vec{x}_u, \end{array} \right\},$$

with

$$\vec{x}_u = \begin{pmatrix} 1 \\ 0 \end{pmatrix}, \text{ and } \vec{y}_u = \begin{pmatrix} 0 \\ 1 \end{pmatrix}$$

A model capable of describing more complex object motion than only translation, for instance rotation, or scaling, may use segmenting the image in individual objects and estimating motion parameter sets for each of these objects. As the number of blocks usually exceeds the number of objects with more than an order of magnitude, the number of motion parameters that needs to be calculated per image is reduced. However, the calculation complexity increases.

The estimated motion vector $\vec{D}(\vec{X}, n)$ resulting from the search block-matching process, is a candidate vector $\vec{C}$ which yields the minimum values of at least one error function $\varepsilon(\vec{C}, \vec{X}, n)$. This can be expressed by:

$$\vec{D}(\vec{X},n) = \arg\min_{\vec{C} \in CS^{\max}} \left( \varepsilon(\vec{C}, \vec{X}, n) \right)$$

Usually the estimated vector $\vec{D}(\vec{X}, n)$ with the smallest match error may be assigned to all positions $\vec{X}$ in the current block 104 for motion compensation.

The error value for a given candidate motion vector $\vec{C}$ 105 can be a function of the luminance values of the pixels in the current block 104 and those of the match blocks, i.e. from a previous match block 110, or a next match block 108, summed over the whole blocks 104, 108, 110. The error value can also be any other function of pixel values, and can be expressed as a sum of cost functions:

$$\varepsilon(\vec{C}, \vec{X}, n) = \sum_{\vec{x} \in B(\vec{X})} Cost\left( F(\vec{x}, n), F(\vec{x} - \vec{C}, n - p) \right)$$

with a common choice for p=1 for non-interlaced signals and p=2 for interlaced signals. One possible error function may be the summed absolute difference (SAD) criterion. For example, when the match error is calculated for a candidate motion vector $\vec{C}$ 105 using the previous image n-1 (P) and the next image n+1 (N), the SAD may be calculated as

$$SAD(\vec{C},\vec{X}) = \sum_{\vec{x} \in B(\vec{X})} \left| P(\vec{x}+\vec{C}) - N(\vec{x}-\vec{C}) \right|$$

where $P(\vec{x}+\vec{C})$ is the luminance value of pixels within match block 110 and $N(\vec{x}-\vec{C})$ is the luminance value of pixels within match block 108. When the candidate motion vector $\vec{C}$ 105 is a 2-dimensional vector $\vec{C} = \begin{pmatrix} v_x \\ v_y \end{pmatrix}$, the SAD may be

$$SAD(\vec{C},\vec{X}) = \sum_{\vec{x} \in B(\vec{X})} \left| P(x_i+v_x, y_i+v_y) - N(x_i-v_x, y_i-v_y) \right|$$

Having explained the general approach for choosing an estimated motion vector from a set of candidate motion vectors, next it will be described how an estimated motion vector may be calculated in case match blocks lie outside the active area of an image.

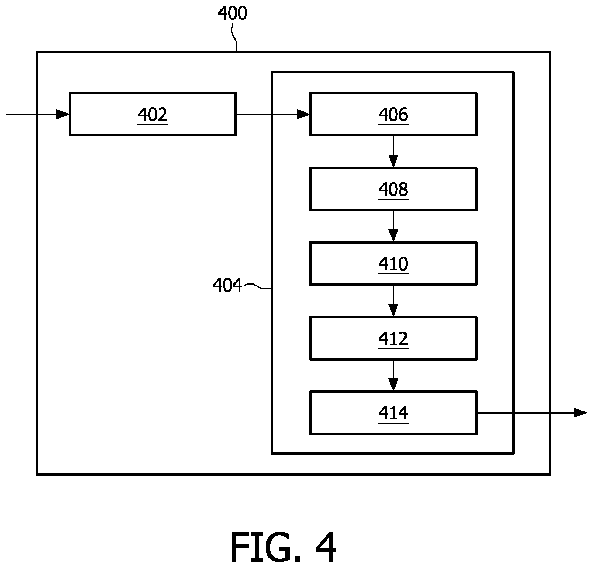

Illustrated in Fig. 3 is a flowchart illustrating a method 300 according to embodiments. The method 300 as illustrated in Fig. 3 may be carried out with a device illustrated in Fig. 4.

The display device 400 comprises a receiver 402. An input signal input to receiver 402 is forwarded to motion estimation unit 404. Motion estimation unit 404 comprises a candidate motion vector detection unit 406, a detection unit 408, a shifting unit 410, a matching unit 412, and an output unit 414. Motion estimation unit 404 can be implemented in hardware (HW) and/or software (SW). As far as implemented in software, a software code stored on a computer readable medium realizes the described functions when being executed in a processing unit of the display device 400.

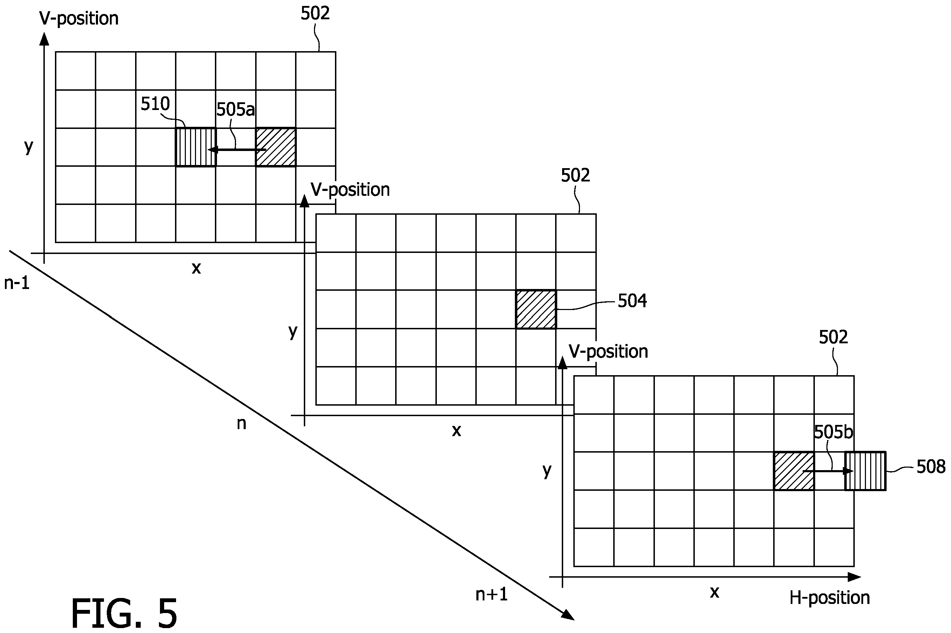

The display device 400 is operated as follows with reference to Fig. 3 and Fig. 5.

After having received input signal at receiver 402 the input signal is forwarded to motion estimation unit 404. In the motion estimation unit 104, the input signal is processed for motion estimation. During motion estimation, for a plurality of blocks within the input image, motion vectors are estimated for further processing. For estimating the motion vectors, in a first step 302 a current block is selected. The steps 302-318 may be carried out for all blocks within each image.

For the current block, a set of candidate motion vectors are selected (304) within candidate motion vector detection unit. This may be done as illustrated in Fig. 2.

After having selected the current block (302) and the set of candidate motion vectors (304), a previous match block and a next match block are determined (306) within detection unit 408 for each of the candidate motion vectors. This is illustrated in Fig. 5 for one motion vector. For a current block 504, all candidate motion vectors 505 from the set of motion vectors are evaluated. In the illustrated example, the motion vector 505 is such, that a previous match block 510 lies left from the current block 504, and a next match block 508 lies right from the current block 504.

In a next step, the active area 502 of an image is detected (308) in detection unit 408. The active area may be the area, which is within the image. Areas outside the image may be considered not active. It may also be possible that the active area 502 is bordered by a black bar, on either side of the image, vertically and horizontally. The black bar may be detected using a black bar detection unit (not depicted).

After having detected, where the active area 502 of the image is, it may be evaluated (310) within detection unit 408, whether the match block 510 and/or the match block 508 both are within the active area 502 or not. In case both match blocks 508, 510 are within the active area 502, processing is continued at step 316. Else processing is continued with calculating a shifting of the block.

In general, when for instance the SAD has to be calculated at a current block with x=0 and candidate motion vector $v_x > 0$, the smallest value of $x - v_x$ will be equal to $-v_x$, thus the corresponding position in match block 510 would lie outside the active area 502. The blocks 504, 508, 510 should be given an offset ($\Delta x$) in the x-direction that is equal to the absolute value of $v_x$ to make sure the match area in the next frame will be inside the active area 502. Similarly, when the x-component of the candidate motion vector would be smaller than zero, the smallest value of $x + v_x$ would be equal to $v_x$ and hence the match block 510 would be outside the active area. This would require an offset that is equal to the absolute value of $v_x$ to make sure both match areas 508, 510 are inside the active video area. In general:

$$SAD'(x, y) = SAD(x + \Delta_x, y + \Delta_y)$$

$$= \sum_{i,j} \left| P(x_i + \Delta_x + v_x, y_j + \Delta_y + v_y) - N(x_i + \Delta_x - v_x, y_j + \Delta_y - v_y) \right|$$

In this equation, the values of $\Delta x$ and $\Delta y$ should be chosen such that both match areas 508, 510 are inside the active area 502. The value of $\Delta x$ will be positive when one of the match blocks 510 are outside the left side of the screen and negative when one of the match blocks 508 is outside the right side of the screen.

In the illustrated case, the match block 508 is outside the right side of the active image 502 when evaluating a motion vector 505 for current block 504. Fig. 5 only shows the location of the match blocks 504, 508, 510, and the pixels of the match blocks 504, 508, 510 are from different frames n-1, n, n+1. In the illustrated case, all values of $x - v_x$ are larger than the width of the active area 502. By shifting all blocks to the left ($v_x < \Delta x < 0$) such that match block 508 is just inside the active area 502, the match error can be calculated albeit at a slightly different location of current block 504, and match blocks 508, 510.

After having detected (310) that the match block 508 is partially outside the active area 502, the shifting unit 410 needs to calculate (312) a shift value ($\Delta x$ and $\Delta y$) to shift the match block 508 inside the active video area 502. There are many solutions possible to calculate these values. One solution is to minimize the absolute value of $\Delta x$ and $\Delta y$. In that case, the actual block at which the match area is calculated is closest to the block for which it should be calculated.

The match blocks 510, 508 in both images are then shifted (314) over the calculated offset by shifting unit 410.

Using the shifted bocks 510, 508, a match error is calculated (316) in matching unit 412. The calculation is done as has been described above. Optionally, an extra penalty may be added to the match error based on the offset vector, i.e. the absolute value of the offset.

Using the calculated match error for all of the candidate motion vectors from the set of candidate motion vectors, the candidate motion vector yielding the minimum match error may be selected (318) as the estimated motion vector in matching unit 412 and output for further processing in output unit 414.

The motion estimation according to embodiments may be applied to all fields where motion is estimated from video signals. In Television sets, this is, for instance, the case in Natural Motion and in motion-compensated de-interlacing. The motion estimation according to embodiments may also be used for PC software. Furthermore, it may be used for video compression. In this area, full-search motion estimation is commonly used instead of 3D-RS. The invention is, however, independent of the exact motion estimation technique used or the way in which the resulting vectors are used in, for instance, a motion-compensation step.

While there have been shown and described and pointed out fundamental novel features of the invention as applied to a preferred embodiment thereof, it will be understood that various omissions and substitutions and changes in the form and details of the devices and methods described may be made by those skilled in the art without departing from the scope of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto. It should also be recognized that any reference signs shall not be constructed as limiting the scope of the claims.

**Claims**

1. A method for determining estimated motion vectors within image signals comprising:

 - creating at least one candidate motion vector (304) for at least one current block (504) within an image,
 - determining (306) for each of the at least one candidate motion vector at least two match blocks (508,510), such that a first match block (510) lies within a temporally preceding neighbouring image of the image of the at least one current block and the second match block (508) lies within a temporally succeeding neighbouring image of the image of the at least one current block,
 - detecting (308,310) if at least one match block lies at least partially outside the active video area of a screen for displaying the image,
 - calculating a match error (316) based on at least two shifted match blocks, **characterised in that**:

- in response to detecting that at least one match block lies at least partially outside the active video area shifting (312, 314) the at least one current block and the at least two match blocks such that the at least two shifted match blocks lie within the active area.

2. The method of claim 1, wherein shifting further comprises shifting the blocks by a same shift vector.

3. The method of claim 1, further comprising detecting the active video area using a black bar detection.

4. The method of claim 1, wherein the candidate motion vector describes a possible displacement of pixels within the current block within a search area.

5. The method of claim 1, wherein the candidate motion vector is created using at least one of:

    A) spatial prediction,
    B) temporal prediction.

6. The method of claim 1, wherein calculating a match error comprises calculating at least one of:

    A) a summed absolute difference;
    B) a mean square error;
    C) a normalized cross correlation;
    D) a number of significant pixels.

7. A computer program for determining estimated motion vectors within image signals the program comprising instructions operable to cause a processor to:

    - create at least one candidate motion vector (304) for at least one current block (504) within an image of the signal,
    - determine (306) for each of the at least one candidate motion vector at least two match blocks (508,510), such that a first match block (510) lies within a temporally preceding neighbouring image of the image of the at least one current block and the second match block (508) lies within a temporally succeeding neighbouring image of the image of the at least one current block,
    - detect (308,310) if at least one match block lies at least partially outside the active video area of a screen for displaying the image,
    - calculate a match error (316) based on at least two shifted match blocks, **characterised in that**:

        - in response to detecting that at least one match block lies at least partially outside the active video area shift (312,314) at least the current block and the at least two match blocks such that the at least two shifted match blocks lie within the active area.

8. A display device (400) comprising:

    - a receiver (402) arranged for receiving a video signal, and
    - a motion estimation unit (404) comprising:
    - a candidate motion vector detection unit (406) arranged for detecting candidate motion vectors for at least one current block (504) within an image of the signal,
    - a matching unit arranged for determining for each of said candidate motion vectors at least two match blocks (508,510), such that a first match block (510) lies within a temporally preceding neighbouring image of the image of the at least one current block and the second match block (508) lies within a temporally succeeding neighbouring image of the image of the at least one current block,
    - a detection unit (408) arranged for detecting if at least one match block lies at least partially outside the active video area of a screen for displaying the image,
    - a matching unit arranged to calculating a match error (316) based on at least two shifted match blocks, **characterised by**:

        - a shifting unit (410) arranged for shifting at least the current block and the at least two match blocks such that the at least two shifted match blocks lie within the active video area in response to the detection unit detecting that at least one match block lies at least partially outside the active video area.

**Patentansprüche**

1. Ein Verfahren zum Bestimmen von geschätzten Bewegungsvektoren in Bildsignalen, aufweisend:

   - Erzeugen von zumindest einem Kandidat Bewegungsvektor (304) für zumindest einen gegenwärtigen Block (504) in einem Bild,
   - Bestimmen (306), für jeden von dem zumindest einen Kandidat Bewegungsvektor, von zumindest zwei Match Blöcken (508, 510) derartig, dass ein erster Match Block (510) in einem zeitlich vorangehenden benachbarten Bild des Bildes des zumindest einen gegenwärtigen Blocks liegt und der zweite Match Block (508) in einem zeitlich nachfolgenden benachbarten Bild des Bildes des zumindest einen gegenwärtigen Blocks liegt,
   - Detektieren (308, 310), ob zumindest ein Match Block zumindest teilweise außerhalb des aktiven Videobereichs eines Bildschirms zum Anzeigen des Bildes liegt,
   - Berechnen eines Match Fehlers (316) basierend auf zumindest zwei verschobenen Match Blöcken,

   **gekennzeichnet durch**:

   - als Reaktion auf das Detektieren, dass zumindest ein Match Block zumindest teilweise außerhalb des aktiven Videobereichs liegt, Verschieben (312, 314) des zumindest einen gegenwärtigen Blocks und der zumindest zwei Match Blöcke derartig, dass die zumindest zwei verschobenen Match Blöcke in dem aktiven Bereich liegen.

2. Das Verfahren gemäß Anspruch 1, wobei das Verschieben ferner aufweist Verschieben der Blöcke um einen gleichen Verschiebungsvektor.

3. Das Verfahren gemäß Anspruch 1, ferner aufweisend
   Detektieren des aktiven Videobereichs unter Verwendung einer schwarzer Balken Detektion.

4. Das Verfahren gemäß Anspruch 1, wobei der Kandidat Bewegungsvektor eine mögliche Verschiebung von Pixeln in dem gegenwärtigen Block in einem Suchbereich beschreibt.

5. Das Verfahren gemäß Anspruch 1, wobei der Kandidat Bewegungsvektor erzeugt wird unter Verwendung von zumindest einer von:

   A) einer räumlichen Vorhersage,
   B) einer zeitlichen Vorhersage.

6. Das Verfahren gemäß Anspruch 1, wobei das Berechnen eines Match Fehlers aufweist Berechnen von zumindest einem von:

   A) einer summierten absoluten Differenz;
   B) einem mittleren quadratischen Fehler;
   C) einer normierten Kreuzkorrelation;
   D) einer Anzahl von signifikanten Pixeln.

7. Ein Computerprogramm zum Bestimmen von geschätzten Bewegungsvektoren in Bildsignalen, wobei das Programm Anweisungen aufweist, welche funktionsfähig sind, einen Prozessor zu veranlassen zum:

   - Erzeugen von zumindest einem Kandidat Bewegungsvektor (304) für zumindest einen gegenwärtigen Block (504) in einem Bild des Signals,
   - Bestimmen (306), für jeden von dem zumindest einen Kandidat Bewegungsvektor, von zumindest zwei Match Blöcken (508, 510) derartig, dass ein erster Match Block (510) in einem zeitlich vorangehenden benachbarten Bild des Bildes des zumindest einen gegenwärtigen Blocks liegt und der zweite Match Block (508) in einem zeitlich nachfolgenden benachbarten Bild des Bildes des zumindest einen gegenwärtigen Blocks liegt,
   - Detektieren (308, 310), ob zumindest ein Match Block zumindest teilweise außerhalb des aktiven Videobereichs eines Bildschirms zum Anzeigen des Bildes liegt,
   - Berechnen eines Match Fehlers (316) basierend auf zumindest zwei verschobenen Match Blöcken,

   **dadurch gekennzeichnet, dass**:

- als Reaktion auf das Detektieren, dass zumindest ein Match Block zumindest teilweise außerhalb des aktiven Videobereichs liegt, Verschieben (312, 314) von zumindest dem gegenwärtigen Block und den zumindest zwei Match Blöcken derartig, dass die zumindest zwei verschobenen Match Blöcke in dem aktiven Bereich liegen.

8. Eine Display Vorrichtung (400) aufweisend:

- einen Empfänger (402), welcher eingerichtet ist zum Empfangen eines Videosignals, und
- eine Bewegung Schätzeinheit (404) aufweisend:
- eine Kandidat Bewegungsvektor Detektionseinheit (406), welche eingerichtet ist zum Detektieren von Kandidat Bewegungsvektoren für zumindest einen gegenwärtigen Block (504) in einem Bild des Signals,
- eine Matching Einheit, welche eingerichtet ist zum Bestimmen, für jeden der Kandidat Bewegungsvektoren, von zumindest zwei Match Blöcken (508, 510) derartig, dass ein erster Match Block (510) in einem zeitlich vorangehenden benachbarten Bild des Bildes des zumindest einen gegenwärtigen Blocks liegt und der zweite Match Block (508) in einem zeitlich nachfolgenden benachbarten Bild des Bildes des zumindest einen gegenwärtigen Blocks liegt,
- eine Detektionseinheit (408), welche eingerichtet ist zum Detektieren, ob zumindest ein Match Block zumindest teilweise außerhalb des aktiven Videobereichs eines Bildschirms zum Anzeigen des Bildes liegt,
- eine Matching Einheit, welche eingerichtet ist zum Berechnen eines Match Fehlers (316) basierend auf zumindest zwei verschobenen Match Blöcken,

**gekennzeichnet durch**:

- eine Verschiebungseinheit (410), welche eingerichtet ist zum Verschieben von zumindest dem gegenwärtigen Block und den zumindest zwei Match Blöcken derartig, dass die zumindest zwei verschobenen Match Blöcke in dem aktiven Videobereich liegen, als Reaktion darauf, dass die Detektionseinheit detektiert, dass zumindest ein Match Block zumindest teilweise außerhalb des aktiven Videobereichs liegt.

## Revendications

1. Procédé de détermination de vecteurs de mouvement estimé au sein de signaux d'image, le procédé comprenant les étapes suivantes :

- création d'au moins un vecteur de mouvement candidat (304) pour au moins un bloc courant (504) au sein d'une image,
- détermination (306), pour chacun de l'au moins un vecteur de mouvement candidat, d'au moins deux blocs d'appariement (508, 510), de sorte qu'un premier bloc d'appariement (510) se situe au sein d'une image voisine temporellement précédente de l'image de l'au moins un bloc courant et que le deuxième bloc d'appariement (508) se situe au sein d'une image voisine temporellement suivante de l'image de l'au moins un bloc courant,
- détection (308, 310) si au moins un bloc d' appariement se situe au moins en partie en dehors de la zone vidéo active d'un écran d'affichage de l'image,
- calcul d'une erreur d'appariement (316) à partir d'au moins deux blocs d'appariement décalés, le procédé étant **caractérisé par** l'étape suivante :

- en réponse à la détection qu'au moins un bloc d'appariement se situe au moins en partie en dehors de la zone vidéo active, décalage (312, 314) de l'au moins un bloc courant et des au moins deux blocs d'appariement de sorte que les au moins deux blocs d'appariement décalés se situent au sein de la zone active.

2. Procédé selon la revendication 1, dans lequel le décalage comprend en outre le décalage des blocs d'un même vecteur de décalage.

3. Procédé selon la revendication 1, comprenant en outre l'étape de détection de la zone vidéo active à l'aide d'une détection de barres noires.

4. Procédé selon la revendication 1, dans lequel le vecteur de mouvement candidat décrit un déplacement possible de pixels au sein du bloc courant dans une zone de recherche.

**5.** Procédé selon la revendication 1, dans lequel le vecteur de mouvement candidat est créé à l'aide d'au moins une des prédictions suivante :

A) une prédiction spatiale,
B) une prédiction temporelle.

**6.** Procédé selon la revendication 1, dans lequel le calcul d'une erreur d'appariement comprend le calcul d'au moins un des paramètres suivantes :

A) une différence absolue sommée ;
B) une erreur quadratique moyenne ;
C) une corrélation croisée normalisée ;
D) un nombre de pixels significatifs.

**7.** Programme d'ordinateur permettant de déterminer des vecteurs de mouvement estimé au sein de signaux d'image, le programme comprenant des instructions utilisables pour amener un processeur à :

- créer au moins un vecteur de mouvement candidat (304) pour au moins un bloc courant (504) au sein d'une image du signal,
- déterminer (306), pour chacun de l'au moins un vecteur de mouvement candidat, au moins deux blocs d'appariement (508, 510), de sorte qu'un premier bloc d'appariement (510) se situe au sein d'une image voisine temporellement précédente de l'image de l'au moins un bloc courant et que le deuxième bloc d'appariement (508) se situe au sein d'une image voisine temporellement suivante de l'image de l'au moins un bloc courant,
- détecter (308, 310) si au moins un bloc d'appariement se situe au moins en partie en dehors de la zone vidéo active d'un écran d'affichage de l'image,
- calculer une erreur d'appariement (316) à partir d'au moins deux blocs d'appariement décalés, le programme étant **caractérisé en ce qu'**il comprend une instruction utilisable pour amener le processeur à :

- en réponse à la détection qu'au moins un bloc d'appariement se situe au moins en partie en dehors de la zone vidéo active, décaler (312, 314) au moins le bloc courant et les au moins deux blocs d'appariement de sorte que les au moins deux blocs d'appariement décalés se situent au sein de la zone active.

**8.** Dispositif d'affichage (400), le dispositif d'affichage comprenant :

- un récepteur (402) conçu pour recevoir un signal vidéo, et
- une unité d'estimation de mouvement (404) comprenant :
- une unité de détection de vecteurs de mouvement candidats (406) conçue pour détecter des vecteurs de mouvement candidats pour au moins un bloc courant (504) au sein d'une image du signal,
- une unité d'appariement conçue pour déterminer, pour chacun desdits vecteurs de mouvement candidats, au moins deux blocs d'appariement (508, 510), de sorte qu'un premier bloc d'appariement (510) se situe au sein d'une image voisine temporellement précédente de l'image de l'au moins un bloc courant et que le deuxième bloc d'appariement (508) se situe au sein d'une image voisine temporellement suivante de l'image de l'au moins un bloc courant,
- une unité de détection (408) conçue pour détecter si au moins un bloc d'appariement se situe au moins en partie en dehors de la zone vidéo active d'un écran d'affichage de l'image,
- une unité d'appariement conçue pour calculer une erreur d'appariement (316) à partir d'au moins deux blocs d'appariement décalés, le dispositif d'affichage étant **caractérisé par** :

- une unité de décalage (410) conçue pour décaler au moins le bloc courant et les au moins deux blocs d'appariement de sorte que les au moins deux blocs d'appariement décalés se situent au sein de la zone vidéo active, en réponse à la détection par l'unité de détection que l'au moins un bloc d'appariement se situe au moins en partie en dehors de la zone vidéo active.

FIG. 1

FIG. 2a

FIG. 2b

```
          ┌─────────────┐
          │     302     │
          └─────────────┘
                 │
                 ▼
          ┌─────────────┐
          │     304     │
          └─────────────┘
                 │
                 ▼
          ┌─────────────┐
          │     306     │
          └─────────────┘
                 │
                 ▼
          ┌─────────────┐
          │     308     │
          └─────────────┘
                 │
                 ▼
  NO    ┌─────────────┐
◄───────│     310     │
        └─────────────┘
 │             │ YES
 │             ▼
 │      ┌─────────────┐
 │      │     312     │
 │      └─────────────┘
 │             │
 │             ▼
 │      ┌─────────────┐
 │      │     314     │
 │      └─────────────┘
 │             │
 │             ▼
 │      ┌─────────────┐
 └─────►│     316     │
        └─────────────┘
               │
               ▼
        ┌─────────────┐
        │     318     │
        └─────────────┘
               │
               ▼
```

# FIG. 3

400

402

404

406

408

410

412

414

# FIG. 4

FIG. 5

EP 2 011 342 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2286500 A

- US 2005013362 A1, PEARSON ERIC

**Non-patent literature cited in the description**

- **G. DE HAAN.** Progress in Motion Estimation for Consumer Video Format Conversion. *IEEE transactions on consumer electronics,* August 2000, vol. 46 (3), 449-459